# EUROPÄISCHE PATENTSCHRIFT

(11) **EP 1 144 128 B1**
(45) Veröffentlichungstag und Bekanntmachung des Hinweises auf die Patenterteilung: **22.10.2003**
(21) Anmeldenummer: 99964642.5
(22) Anmeldetag: 21.12.1999
(51) Int. Cl.: B05D 7/02

(54) **MEHRSCHICHTSYSTEME MIT MINDESTENS EINER SCHICHT AUF DER BASIS MESOMORPHER POLYELEKTROLYTKOMPLEXE, VERFAHREN ZU IHRER HERSTELLUNG UND IHRE VERWENDUNG**
MULTILAYER SYSTEMS WITH AT LEAST ONE LAYER BASED ON MESOMORPHIC POLYELECTROLYTE COMPLEXES, METHOD FOR PRODUCING THEM AND THEIR USE
SYSTEMES MULTICOUCHES COMPORTANT AU MOINS UNE COUCHE A BASE DE COMPLEXES POLYELECTROLYTIQUES MESOMORPHES, LEUR PROCEDE DE PRODUCTION ET LEUR UTILISATION

(30) Priorität: 24.12.1998 DE 19860170
(43) Veröffentlichungstag der Anmeldung: 17.10.2001
(73) Patentinhaber: BASF Coatings AG, 48165 Münster (DE)
(72) Erfinder: PODLASKI-PYZIK, Beate, D-48165 Münster (DE); HALTMANN, Astrid, D-48165 Münster (DE); BREMSER, Wolfgang, D-48165 Münster (DE)
(74) Vertreter: Fitzner, Uwe, Dr.
(86) Internationale Anmeldenummer: EP9910242
(87) Internationale Veröffentlichungsnummer: WO00038846

(56) Entgegenhaltungen:
- WO-A-96/05235
- DE-A- 4 428 641

## Beschreibung

Die vorliegende Erfindung betrifft neue Mehrschichtsysteme, insbesondere Formteile, Laminate oder mehrschichtige Lackierungen, welche mindestens eine Schicht auf der Basis mesomorpher Polyelektrolytkomplexe enthalten. Außerdem betrifft die Erfindung neue reaktive Systeme, welche die Herstellung der neuen Mehrschichtsysteme ermöglichen, sowie ein Verfahren zur ihrer Herstellung. Desweiteren richtet sich die vorliegende Erfindung auf ein Verfahren zur Herstellung der neuen Mehrschichtsysteme mit Hilfe der neuen reaktiven Systeme. Nicht zuletzt betrifft die vorliegende Erfindung die Verwendung der neuen Mehrschichtsysteme als Formteile oder Laminate, insbesondere im Automobilbau, sowie die Verwendung der neuen reaktiven Systeme in der Autombilserien- und -reparaturlackierung, der industriellen Lackierung, inklusive Coil Coating, und der Möbellackierung.

Polyelektrolytkomplexe sind in der Lage, durch Selbstorganisation sogenannte mesomorphe Phasen zu bilden. Diese weisen bereits in flüssiger Phase eine Fernordnung auf. Aus den gefällten Polyelektrolytkomplexen lassen sich flexible Filme herstellen, die von hoher Homogenität und optischer Qualität sind sowie in vielen Fällen eine große mechanische Festigkeit aufweisen (vgl. den Artikel von Markus Antonietti und Christine Göltner "Überstrukturen funktioneller Kolloide: eine Chemie im Nanometerbereich" in Angewandte Chemie, Band 109, 1997, Seiten 944 bis 964, oder den Artikel von C. K. Ober und G. Wegner "Polyelectrolyte-Surfactant Complexes in the Solid State: Facile Building Blocks for Self-Organizing Materials" in Avanced Materials, Band 9, 1997, Seiten 17 bis 31. Indes geht aus diesem Artikel nicht hervor, ob sich die gefällten Polyelektrolytkomplexe für Anwendungszwecke eignen, welche besonders anspruchsvoll sind, wie etwa in Formteilen oder Laminaten oder als Beschichtungsstoffe, insbesondere als Primerschichten für mehrschichtige Lackierungen.

In ihrem Vortrag "Structural studies on thin organic coatings built by repeated adsorption of polyelectrolytes", gehalten anläßlich der 23^{rd} International Conference in Organic Coatings in Athen, Griechenland, beschreiben A. M. Jonas et al. die Herstellung von ultradünnen Multischichten durch mehrfache Adsorption von Polymeren wie Poly(vinylsulfat) oder Poly(styrolsulfonsäure) einerseits und Poly(ethylenimin) andererseits. Über potentielle Verwendungszwecke wird indes nichts gesagt.

Für die Herstellung dieser bekannten mesomorphen Polyeletrolykomplexe müssen reine Ausgangsverbindungen verwendet werden, was im Hinblick auf die Wirtschaftlichkeit der Verfahren und die Zugänglichkeit der Ausgangsverbindungen von Nachteil ist.

Mesomorphe Polyelektrolytkomplexe, welche der Herstellung von Filmen, Folien, Fasern, Formkörpern und Beschichtungen dienen, sind aus der deutschen Patentanmeldung DE-A-44 28 641 oder der europäischen Patentschrift EP-A-0 775 162 bekannt. Hierbei handelt es sich vor allem um mesomorphe Komplexe aus anionischen oder kationischen Polyelektrolyten einerseits und kationischen oder anionischen Tensiden andererseits. Sie weisen bereits zahlreiche vorteilhafte anwendungstechnische Eigenschaften auf, indes kann insbesondere ihre Beständigkeit gegenüber Wasser, organischen und anorganischen Säuren und Basen sowie organischen Lösemitteln noch weiter verbessert werden. Außerdem ist nicht bekannt, ob sie sich für die Herstellung von Formteilen, Laminaten oder mehrschichtigen Lackierungen eignen.

In der internationalen Patentanmeldung WO 97/14751 wird die Herstellung eines wasserdispergierbaren Harzes beschrieben, bei dem man die wäßrige Dispersion eines modifizierten Epoxidharzes mit quaternären Ammoniumhydroxidgruppen mit der wäßrigen Dispersion eines Acrylsäurepolymerisats neutralisiert. Zur resultierenden Dispersion gibt man wäßrigen Ammoniak, wonach man Methylmethacrylat in diesem Medium radikalisch polymerisiert. Das resultierende wasserdispergierbare Harz dient der Herstellung wäßriger Überzugsmittel. Diese üblichen und bekannten Beschichtungsstoffe bilden keine mesomorphen Phasen.

In der deutschen Patentanmeldung DE-A-44 45 200 werden Beschichtungstoffe beschrieben, welche Bindemittel A) enthalten, die zumindest teilweise ionische Gruppen tragen. Außerdem enthalten sie weitere Bindemittel C), welche sowohl bei der Lagerungstemperatur als auch bei der Härtungstemperatur der Überzugsmittel miteinander mischbar sind und ionische Gruppen tragen, deren Ladung entgegengesetzt zur Ladung der Bindemittel A) ist. Hierbei sind die Mengen an Bindemittel A) einerseits und der Bindemittel C) andererseits so aufeinander abgestimmt, daß 0,5 bis 70% der Anzahl der Ladungen der ionischen Gruppen von A) durch die Landungen der ionischen Gruppen von C) neutralisiert sind. Die Bindemittel C) werden vor allem in Form von Pigmentpasten zugesetzt. Die Beschichtungsstoffe dienen der Herstellung von Einschichtig- und Mehrschichtlackierungen auf dem Kraftfahrzeugsektor. Diese üblichen und bekannten Beschichtungsstoffe bilden jedoch keine mesomorphen Phasen.

Desweiteren sind mehrschichtige Lackierungen auf den Gebieten der Kraftfahrzeuglackierung, der industriellen Lackierung oder der Möbelindustrie üblich und bekannt. Beispielhaft sei auf die in der Automobilserienlackierung vewendeten Lackaufbauten aus Elektrotauchlack, Füller, Basislack und Klarlack verwiesen. Mehrschichtige Lackierungen, welche mindestens eine Schicht auf der Basis mesomorpher Polyelektrolytkomplexe enhalten, sind indes bislang nicht beschrieben worden.

Aufgabe der vorliegenden Erfindung ist es, neue Mehrschichtsysteme, insbesondere Formteile, Laminate oder mehrschichtige Lackierungen, bereitzustellen, welche mindestens eine Schicht auf der Basis mesomorpher Polyelektrolytkomplexe enthalten und eine Alternative zu den bislang bekannten Formteilen und Laminaten und mehrschichtigen Lackierungen bieten. Vor allem sollen die Schichten auf der Basis mesomorpher Polyelektrolytkomplexe die Nachteile der bisher bekannten Schichten auf der Basis mesomorpher Polyelektrolytkomplexe nicht mehr länger aufweisen, sondern die Herstellung der neuen Mehrschichtsysteme, insbesondere der mehrschichtigen Lackierungen, ermöglichen.

Insbesondere sollen die neuen Mehrschichtsysteme, insbesondere die mehrschichtigen Lackerierungen, eine gute Haftung zwischen den einzelnen Schichten und dem gegebenenfalls vorhandenen Substrat und hohe Härte bei gleichzeitig hoher Flexibilität und hoher Beständigkeit gegenüber Wasser, organischen anorganischen Säuren oder Basen und Lösungsmitteln aufweisen. Außerdem sollen sie witterungs- und lichtstabil sein, so daß sie auch für Außenanwendungen in Betracht kommen. Nicht zuletzt sollen sich die mesomorphen Polyelektrolytkomplexe, welche der Herstellung der neuen Mehrschichtsysteme, insbesondere der mehrschichtigen Lackierungen, dienen, nicht nur aus den reinen Ausgangsverbindungen herstellen lassen, sondern auch aus den Gemischen, wie sie bei der großtechnischen Herstellung solcher Ausgangsverbindungen anfallen.

Außerdem ist es die Aufgabe der vorliegenden Erfindung, ein neues Verfahren bereitzustellen, welches die Herstellung der neuen Mehrschichtsysteme, insbesondere der mehrschichtigen Lackierungen, in einfacher Weise ermöglicht.

Desweiteren ist es die Aufgabe vorliegenden Erfindung, neue reaktive Systeme zu finden, welche neuartige vorteilhafte Eigenschaftkombinationen aufweisen und dadurch neue Anwendungsbereiche für mesomorphe Polyelektrolytkomplexe, insbesondere bei der Herstellung neuer Mehrschichtsysteme, erschließen.

Demgemäß wurde das neue Mehrschichtsystem gefunden, welches
(I) mindestens einen Bestandteil (IA), welcher mesomorphe Polyelektrolytkomplexe enthält oder hieraus besteht und welcher herstellbar ist, indem man
   I.1) in einer flüssigen Phase (IB)
      I.1.1) mindestens einen polymeren und/oder oligomeren, organischen, anionischen Polyelektrolyten (IC) mit mindestens einem polymeren und/oder oligomeren, organischen, kationischen Polyelektrolyten (ID) und/oder mindestens einem kationischen Tensid (IE)
         oder
      I.1.2) mindestens einen polymeren und/oder oligomeren, organischen, kationischen Polyelektrolyten (ID) mit mindestens einem anionischen Tensid (IF)
      in stöchiometrischem oder nicht stöchiometrischem Verhältnis umsetzt,
   I.2) die resultierende flüssige Phase (IG) auf ein Unterlage oder in eine Form gießt und
   I.3) sich verfestigen läßt und
   I.4) den resultierenden Festkörper (IH) tempert;
   sowie
(II) mindestens eine Schicht (IIA), welche dreidimensional vernetzt ist und herstellbar ist, indem man
   II.1) mindestens einen wäßrigen, thermisch härtbaren Beschichtungsstoff (IIB), enthaltend
      II.1.1) mindestens ein Bindemittel (IIC) und
      II.1.2) mindestens ein Vernetzungsmittel (IID),
      auf die Oberfläche des Bestandteils (IA) appliziert und
   II.2) die resultierende Naßschicht (IIE) thermisch härtet.

Im Rahmen der vorliegenden Erfindung umfaßte Begriff "Mehrschichtsystem" Formteile von beliebiger äußerer Form, planare oder im wesentlichen planare Laminate und mehrschichtige Lackierungen. Im folgenden wird das neue Mehrschichtsystem als "erfindungsgemäßes Mehrschichtsystem" bezeichnet.

Außerdem wurde das neue Verfahren zur Herstellung des erfindungsgemäßen Mehrschichtsystems gefunden, bei dem man zunächst
(I) mindestens einen Bestandteil (IA), welcher mesomorphe Polyelektrolytkomplexe enthält oder hieraus besteht, herstellt, indem man
   I.1) in einer flüssigen Phase (IB)
      I.1.1) mindestens einen polymeren und/oder oligomeren, organischen, anionischen Polyelektrolyten (IC) mit mindestens einem polymeren und/oder oligomeren, organischen, kationischen Polyelektrolyten (ID) und/oder mindestens einem kationischen Tensid (IE)
         oder
      I.1.2) mindestens einen polymeren und/oder oligomeren, organischen, kationischen Polyelektrolyten (ID) mit mindestens einem anionischen Tensid (IF)
      in stöchiometrischem oder nicht stöchiometrischem Verhältnis umsetzt,
   I.2) die resultierende flüssige Phase (IG) auf eine Unterlage oder in eine Form gießt und
   I.3) sich verfestigen läßt und
   I.4) den resultierenden Festkörper (IH) tempert;
   wonach man auf dem resultierenden Bestandteil (IA)
(II) mindestens eine Schicht (IIA), welche dreidimensional vernetzt ist, herstellt, indem man
   II.1) mindestens einen wäßrigen, thermisch härtbaren Beschichtungsstoff (IIB), enthaltend
      II.1.1) mindestens ein Bindemittel (IIC) und
      II.1.2) mindestens ein Vernetzungsmittel (IID),
      auf die Oberfläche des Bestandteils (IA) appliziert und
   II.2) die resultierende Naßschicht (IIE) thermisch härtet.

Im folgenden wird das neue Verfahren zur Herstellung des erfindungsgemäßen Mehrschichtsystems der Kürze halber als "erfindungsgemäßes Verfahren" bezeichnet.

Nicht zuletzt wurde das neue reaktive System gefunden, welches
(I) mindestens einen mesomorphen Polyelektrolytkomplex aus
   I.1.1) mindestens einem polymeren und/oder oligomeren, organischen, anionischen Polyelektrolyten (IC) und mindestens einem polymeren und/oder oligomeren, organischen, kationischen Polyelektrolyten (ID) und/oder mindestens einem kationischen Tensid (IE)
      oder
   I.1.2) mindestens einem polymeren und/oder oligomeren, organischen, kationischen Polyelektrolyten (ID) und mindestens einem anionischen Tensid (IF)
   sowie
(II) mindestens einen wäßrigen, thermisch härtbaren Beschichtungsstoff (IIB), enthaltend
   II.1.1) mindestens ein Bindemittel (IIC) und
   II.1.2) mindestens ein Vernetzungsmittel (IID)
   umfaßt.

Im Hinblick auf den Stand der Technik war es überraschend und nicht vorhersehbar, daß die Aufgaben, welche der vorliegenden Erfindung zugrundeliegen, mit Hilfe der erfindungsgemäßen Teile, des erfindungsgemäßen Verfahrens und des erfindungsgemäßen reaktiven Systems gelöst werden konnten. Insbesondere ist hervorzuheben, in welch einfacher und eleganter und damit vorteilhafter und wirtschaftlicher Art und Weise mesomorphe Polyelektrolytkomplexe aus an sich bekannten Ausgangsverbindungen in die erfindungsgemäßen Mehrschichtsysteme eingebracht und dadurch neuen Anwendungsgebieten zugeführt werden können.

Die erste erfindungswesentliche Komponente (I) des erfindungsgemäßen Mehrschichtsystems ist der Bestandteil (IA). Hierbei kann das erfindungsgemäße Mehrschichtsystem einen oder mehrere Bestandteile (IA) enthalten.

Der Bestandteil (IA) enthält oder besteht aus mindestens einem mesomorphen Polyelektrolytkomplex. Welcher Variante im Einzelfall der Vorzug gegeben wird, richtet sich nach dem jeweiligen Verwendungszweck des erfindungsgemäßen Mehrschichtsystems.

Der eindeutige Nachweis mesomorpher Strukturen gelingt bekanntermaßen mittels der Kleinwinkel-Röntgendifftaktometrie. Hierbei zeigt sich mindestens ein schmaler Streupeak, welcher eine flüssigkristalline Morphologie im Bestandteil (IA) kennzeichnet. Weiterhin zeigen polarisationsmikroskopische Aufnahmen unter gekreuzten Polarisatoren bekanntermaßen bei den meisten mesomorphen Strukturen typische Texturen doppelbrechender Domänenstrukturen.

Für die Herstellung des Bestandteils (IA) werden in einer ersten Variante des erfindungsgemäßen Verfahrens in der flüssigen Phase (IB) mindestens ein polymerer und/oder oligomerer, organischer, anionischer Polyelektrolyt (IC) mit mindestens einem polymeren und/oder oligomeren, organischen, kationischen Polyelektrolyten (ID) und/oder mindestens einem kationischen Tensid (IE) umgesetzt.

Geeignete erfindungsgemäß zu verwendende Polyelektrolyte (IC) enthalten anionische Gruppen wie Carboxylat-, Sulfonat-, Sulfit-, Sulfat-, Phosphat-, Phosphonat- oder Boratgruppen, von denen die Carboxylat-, Sulfonat- und die Phosphonatgruppen besonders vorteilhaft sind und deswegen besonders bevorzugt verwendet werden.

Beispiele geeigneter erfindungsgemäß zu verwendender Polyelektrolyte (IC) sind Poly- und Oligoester, Poly- und Oligourethane, Polymere und Oligomere von olefinisch ungesättigten Verbindungen, Epoxidharze oder Alkydharze, welche die vorstehend genannten anionischen Gruppen enthalten.

Die Herstellung dieser Polyelektrolyte (IC) ist an sich bekannt. So können die Oligooder Polyester beispielsweise durch Umsetzung von Polyolen mit einem Überschuß an Polycarbonsäuren hergestellt werden. Die Oligo- oder Polyurethane können durch die Umsetzung von Polyolen, Polyisocyanaten und Dihydroxycarbonsäuren wie Dimethylolpropionsäure erhalten werden. Die anionischen Gruppen können in die Epoxidharze in einfacher Weise durch Umsetzung der Epoxidgruppen mit Phosphorsäure eingeführt werden. Die Oligomere und Polymere von olefinisch ungesättigten Verbindungen mit anionischen Gruppen können in einfacher Weise durch Oligomerisation oder Polymerisation geeigneter olefinisch ungesättigter Verbindungen hergestellt werden.

Von diesen sind die Polymere und Oligomere von olefinisch ungesättigten Verbindungen besonders vorteilhaft und werden erfindungsgemäß bevorzugt verwendet.

Von diesen sind wiederum diejenigen Polyelektrolyte (IC) ganz besonders vorteilhaft, welche 20 bis 100 mol-% von einer oder einer Mischung von mehreren der folgenden Monomereinheiten der Gruppe (1) enthalten:

**Gruppe (1):** monoethylenisch ungesättigte C₃- bis C₁₀ - Monocarbonsäuren, deren Alkalimetallsalze und/oder Ammoniumsalze, beispielsweise Acrylsäure, Methacrylsäure, Dimethylacrylsäure, Ethylacrylsäure, Allylessigsäure oder Vinylessigsäure; weiterhin monoethylenisch ungesättigte C₄- bis C₈-Dicarbonsäuren, deren Halbester, Anhydride, Alkalimetallsalze und/oder Ammoniumsalze, beispielsweise Maleinsäure, Fumarsäure, Itaconsäure, Mesaconsäure, Methylenmalonsäure, Citraconsäure, Maleinsäureanhydrid, Itaconsäureanhydrid oder Methylmalonsäureanhydrid; weiterhin Sulfonsäuregruppen enthaltende monoethylenisch ungesättigte Monomere, beispielsweise Allylsulfonsäure, Styrolsulfonsäure, 2-Acrylamido-2-methylpropansulfonsäure, Methallylsulfonsäure, Vinylsulfonsäure, Acrylsäure-3-sulfopropylester oder Methacrylsäure-3-sulfopropylester; weiterhin Phosphonsäuregruppen enthaltende monoethylenisch ungesättigte Monomere, beispielsweise Vinylphosphonsäure, Allylphosphonsäure oder Acrylamidomethylpropanphosphonsäure.

Die Polyelektrolyte (IC) werden in der Säureform, teilneutralisiert oder vollständig neutralisiert verwendet.

Bis zu 80 mol-% der Monomereinheiten des Polyelektrolyten (IC) können hierbei aus einem oder mehreren nichtionischen Monomeren der Gruppe (2) bestehen:

**Gruppe (2):** C₁- bis C₂₀- Alkyl- und Hydroxialkylester von monoethylenisch ungesättigten C₃- bis C₁₀-Monocarbonsäuren oder C₄- bis C₈- Dicarbonsäuren, beispielsweise Methylacrylat, Ethylacrylat, n-Butylacrylat, Stearylacrylat, Maleinsäurediethylester, Hydroxyethylacrylat, Hydroxypropylacrylat, Hydroxybutylacrylat, Hydroxyethylmethacrylat oder Hydroxypropylmethacrylat; weiterhin (Meth)Acrylester von alkoxylierten C₁- bis C₁₈-Alkoholen, die mit 2 bis 50 mol Ethylenoxid, Propylenoxid, Butylenoxid oder Mischungen hiervon umgesetzt sind; weiterhin Amide und N-substituierte Amide von monoethylenisch ungesättigten C₃- bis C₁₀-Monocarbonsäuren oder C₄- bis C₈- Dicarbonsäuren, beispielsweise Acrylamid, Methacrylamid, N-Alkylacrylamide oder N, N-Dialkylacrylamide mit jeweils 1 bis 18 C-Atomen in der Alkylgruppe wie N-Methacrylamid, N,N-Dimethylacrylamid, N-tert.-Butylacrylamid oder N-Octadecylacrylamid, Maleinsäuremonomethylhexylamid, Maleinsäuremonodecylamid, Dimethylaminopropylmethacrylamid oder Acrylamidoglykolsäure; weiterhin Alkylamidoalkyl(meth)acrylate, beispielsweise Dimethylaminoethylacrylat, Dimethylaminoethylmethacrylat, Ethylaminoethylacrylat, Diethylaminoethylmethacrylat, Dimethylaminopropylacrylat oder Dimethylaminopropylmethacrylat; weiterhin Vinylester, Vinylformiat, Vinylacetat oder Vinylpropionat, wobei diese nach der Polymerisation auch verseift vorliegen können; weiterhin N-Vinylverbindungen, beispielsweise N-Vinylpyrrolidon, N-Vinylaprolactam, N-Vinylformamid, N-Vinyl-N-methylformamid, 1-Vinylimidazol oder 1-Vinyl-2-methylimidazol; weiterhin Vinylether von C₁- bis C₁₈-Alkoholen, Vinylether von alkoxylierten C₁- bis C₁₈-Alkoholen und Vinylether von Polyalkylenoxiden wie Polyethylenoxid, Polypropylenoxid oder Polybutylenoxid; weiterhin lineare, verzweigte oder cyclische Olefine, beispielsweise Ethen, Propen, Buten, Isobuten, 1-Penten, Cyclopenten,1-Hexen, 1-Hepten, 1-Octen, 2,4,4'-Trimethylpenten-1, 1-Nonen, 1-Decen, Styrol oder dessen Derivate wie alpha-Methylstyrol, Inden, Dicyclopentadien oder reaktive Doppelbindungen tragende höhere Olefine wie Oligopropen und Polyisobuten.

Auch bei den kationischen Polyelektrolyten (ID) handelt es sich um Oligo- und Polyester, Oligo- und Polyurethane, Oligomere und Polymere von olefinisch ungesättigten Verbindungen oder um Epoxidharze und Alkydharze, nur daß sie nunmehr kationische Gruppen enthalten. Außerdem können Oligomere und Polymere verwendet werden, welche Aminogruppen in der Hauptkette enthalten.

Beispiele geeigneter kationischer Gruppen sind primäre, sekundäre, tertiäre und quaternäre Ammoniumgruppen oder Sulfoniumgruppen, von denen die Ammoniumgruppen besonders vorteilhaft sind und deshalb besonders bevorzugt verwendet werden.

Zur Herstellung von Amino- oder Ammoniumgruppen enthaltenden Oligomeren und Polymeren werden beispielsweise die in Gruppe (3) aufgeführten Monomere in Anteilen von 20 bis 100 mol-% verwendet.

**Gruppe (3):** Monomere, die Amino- oder Iminogruppen wie z. B. Dimethylaminoethylacrylat, Diethylaminoethylmethacrylat, Dimethylaminopropylmethacrylamid oder Allylamin;
Monomere, die quaternäre Ammoniumgruppen tragen, z. B. vorliegend als Salze, wie sie durch Umsetzung der basischen Aminofunktionen mit Säuren wie Salzsäure, Schwefelsäure, Salpetersäure, Ameisensäure oder Essigsäure erhalten werden, oder in quaternisierter Form (Beispiele geeigneter Quaternisierungsmittel sind Dimethylsulfat, Diethylsulfat, Methylchlorid, Ethylchlorid oder Benzylchlorid), wie z. B. Dimethylaminoethylacrylat-hydrochlorid, Diallyldimethylammoniumchlorid, Dimethylaminoethylacrylat-methochlorid, Dimethylaminoethylaminopropylmethacrylamid-methosulfat, Vinylpyridiniumsalze oder 1-Vinylimidazoliumsalze;
Monomere, bei denen die Aminogruppen und/oder Ammoniumgruppen erst nach der Polymerisation und anschließender Hydrolyse freigesetzt werden, wie beispielsweise N-Vinylformamid oder N-Vinylacetamid.

Bis zu 80 mol-% der Monomereeinheiten des Polyelektrolyten (ID) können hierbei aus einem oder mehreren nichtionischen Monomeren der Gruppe (2) bestehen.

Weiterhin können als Polyelektrolyte (ID) Polyethylenimin oder Polypropylenimin verwendet werden.

Außerdem kommen Epoxidharze, deren Epoxidgruppen mit Aminen und/oder ketiminisierten Aminen umgesetzt worden sind, in Betracht.

Diese Polyelektrolyte (ID) werden in der Basenform teilweise neutralisiert oder vollständig neutralisiert verwendet.

Beispiele geeigneter kationischer Tenside (IE) sind solche, welche Ammoniumgruppen enthalten, wobei der Ammoniumverbindung vorteilhafterweise ein offenkettiges Amin zugrunde liegt, wie etwa C₈- bis C₁₈-Alkytrimethylammoniumchloride oder -bromide, Ditalgdimethylaminoniumchlorid oder Lauryl-benzyl-dimethylammoniumchlorid.

Weitere Beispiele geeigneter kationischer Tenside (IE) sind solche, welche Sulfoniumgruppen enthalten. Tenside dieser Art werden erhalten durch Umsetzung von Epoxidharzen mit sekundären Sulfiden wie Thiodiethanol in der Gegenwart von Säuren.

Weitere Beispiele kationischer Tenside (IE) sind solche, denen ein cyclisches Amin oder Imin zugrunde liegt, z. B. Pyridinium-, Imidazolinium-, Piperidinium -, Oxazolinium- oder Pyrimidiniumgruppen enthaltende Tenside.

Zur Herstellung des Bestandteils (IA) werden in einer weiteren Variante des erfindungsgemäßen Verfahrens polymere und/oder oligomere, organische, kationische Polyelektrolyte (ID) mit anionischen Tensiden (IF) umgesetzt.

Beispiele geeigneter Polyelektrolyte (ID) werden vorstehend im Detail beschrieben.

Beispiele geeigneter Tenside (IF) sind Alkylbenzolsulfonate, Fettalkoholsulfate, Fettalkoholpolyglykolethersulfate, Alkylglycerylethersulfonate, Fettalkoholpolyglykolethermethylcarboxylate, Paraffinsulfonate, Olefinsulfonate, Sulfobernsteinsäurehalb- und -diester, Alkylphenolethersulfate sowie Alkyl- und Dialkylphosphate, insbesondere C₈- bis C₁₈-Alkansulfonate, C₁₂ - bis C₁₆-Alkylsulfate, C₁₂- bis C₁₆-Alkylsulfosuccinate oder sulfatierte ethoxylierte C₁₂- bis C₁₆- Alkohole.

Weitere Beispiele geeigneter Tenside (IF) sind sulfatierte Fettsäurealkanolamine, alpha- Sulfofettsäureester, Fettsäuremonoglyceride oder Fettsäureester, -sarkoside, -glykolate, -lactate, -tauride oder -isothionate oder die üblichen Seifen, d. h. die Alkalimetallsalze der natürlichen Fettsäuren.

Die Tenside (IF) können in Form ihrer Natrium-, Kalium- oder Ammoniumsalze sowie als lösliche Salze organischer Basen wie Mono -, Di- oder Triethanolamin oder anderer substituierter Amine vorliegen.

Besonders vorteilhafte erfindungsgemäße Mehrschichtsysteme werden erhalten, wenn die vorstehend im Detail beschriebenen Polyelektrolyte (IC) mit den vorstehend im Detail beschriebenen Polyelektrolyten (ID) und/oder den Tensiden (IE), insbesondere aber den Polyelektrolyten (ID), umgesetzt werden. Diese Variante wird deshalb erfindungsgemäß besonders bevorzugt.

Weitere besondere Vorteile ergeben sich, wenn man Polyelektrolyte (IC) und (ID) auswählt, deren Polymerhauptketten, für sich selbst gesehen, nicht miteinander verträglich wären, sondern sich in fester Phase wieder entmischten. Der Fachmann kann daher ganz besonders vorteilhafte Kombinationen von Polyelektrolyten (IC) und (ID) in einfacher Weise auswählen.

Der Bestandteil (IA) wird in erfindungsgemäßer Verfahrensweise in einer flüssigen Phase (IB) hergestellt. Erfindungsgemäß bilden sich in der flüssigen Phase (IB) aus den Ausgangsverbindungen mesomorphe Polyelektrolytkomplexe und/oder deren Vorstufen, wodurch die flüssige Phase (IG) resultiert.

### Beispiele geeigneter flüssiger Phasen sind

- homogene Schmelzen, welche im wesentlichen aus den nachstehend im Detail beschriebenen, erfindungsgemäß zu verwendenden Polyelektrolyten (IC) einerseits und Polyelektrolyten (ID) und/oder Tensiden (IE) andererseits oder aus den erfindungsgemäß zu verwendenden Polyelektrolyten (ID) und Tensiden (IF) bestehen,
   oder
- im wesentlichen molekulardisperse, homogene Lösungen der vorstehend genannten Ausgangsverbindungen in wäßrigen, wäßrig-organischen oder organischen Medien.

Im Rahmen der vorliegende Erfindungen werden unter wäßrigen Medien Wasser oder wäßrige Lösungen von organischen und anorganischen Säuren, Basen, Salzen oder sonstigen, kovalenten Verbindungen, ausgenommen organische Lösemittel, verstanden.

Unter wäßrig-organischen Medien sind die vorstehend genannten Medien zu verstehen, wenn sie wirksame Mengen an organischen Lösemitteln enthalten. Wirksam sind solche Mengen, welche bewirken, daß sich die Ausgangsverbindungen, die in rein wäßrigen Medien unlöslich wären, hierin lösen. Außerdem können sie hierin lösliche organische und anorganische Säuren, Basen, Salze oder sonstige, kovalente Verbindungen enthalten

Organische Medien sind rein organische Lösemittel oder Lösemittelgemische, welche hierin lösliche organische und anorganische Säuren, Basen, Salze oder sonstige, kovalente Verbindungen enthalten können.

Welche Variante für Herstellung eines erfindugswesentlichen Bestandteils (IA) die meisten Vorteile bietet, kann der Fachmann in einfacher Weise anhand der Eigenschaften der vorstehend genannten Ausgangsverbindungen entscheiden.

So kommen für die Herstellung der Bestandteile (IA) in der Schmelze (IB) vor allem thermoplastische Ausgangsverbindungen in Betracht. Ihre Vermischung und weitere Umsetzung kann beispielsweise in einem üblichen und bekannten Kneter oder Extruder erfolgen.

Werden die Bestandteile (IA) in Lösung hergestellt, ist es von Vorteil, die in Lösung resultierenden mesomorphen Polyelektrolytkomplexe und/oder ihre Vorstufen durch mehrfaches Ausfällen aus der Lösung und Wiederauflösen zu reinigen. Gegebenenfalls können durch mehrmaliges Waschen des organischen Mediums mit Wasser im Sinne eines Sol-Gel-Separationsprozesses überschüssige Reaktanden und Salze ausgewaschen werden. Selbstverständlich können diese Reinigungsverfahren auch auf die mesomorphen Polyelektrolytkomplexe und/oder ihre Vorstufen angewandt werden, welche in einer Schmelze erzeugt worden sind.

### Erfindungsgemäß können

- die Polyelektrolyte (IC) mit den Polyelektrolyten (ID) und/oder den Tensiden (IE) oder
- die Polyelektrolyte (ID) mit den Tensiden (IF)
in stöchiometrischem oder nicht stöchiometrischem Verhältnis umgesetzt werden. Welche Variante man hierbei wählt, richtet sich danach, welches Eigenschaftsprofil des Bestandteils (IA) man erzeugen will. Der Fachmann kann daher die vorteilhaftesten Reaktionsbedingungen anhand einfacher Vorversuche ermitteln.

Die gereinigten mesomorphen Polyelektrolytkomplexe und/oder ihre Vorstufen werden dann wieder in einem geeigneten Medium aufgelöst oder sie werden aufgeschmolzen, wodurch die flüssige Phase (IG) resultiert.

Die in erfindungsgemäßer Verfahrensweise resultierende flüssige Phase (IG) wird im weiteren Verlauf des erfindungsgemäßen Verfahrens auf eine geeignete Unterlage gegossen. Im Rahmen der vorliegenden Erfindungen umfaßt der Begriff "Gießen" alle üblichen und bekannten Methoden der Applikation flüssiger Phasen wie Tauchen, Spritzen, Rakeln, Streichen, Aufwalzen (Roller Coating) oder Gießen in Form eines flüssigen Vorhangs. Beispiele geeigneter Unterlagen sind Filme, Folien, Fasern, Gewebe oder Formteile, insbesondere Automobilkarosseriebauteile, aus Metall, Glas, Holz, Papier, Kunststoff, Leder oder Verbundmaterialien hieraus. Diese Unterlagen können beim Gießen statisch ruhen oder bewegt werden wie etwa beim Coil Coating-Verfahren. Beispielsweise kann die flüssige Phase (IG) in gleichmäßiger, dünner Schicht auf ein Metallband ausgegossen und dann in geeigneter Weise weiterverarbeitet werden.

Die resultierende flüssige Phase (IG) kann indes auch in eine Form gegossen werden. Im Rahmen der vorliegenden Erfindungen ist hierunter nicht nur das Ausgießen in eine vorgefertigte feste Hohlform zu verstehen, sondern auch die formgebende Bearbeitung, insbesondere von Schmelzen (IG), durch Extrusion, Coextrusion, Spritzgießen, Kalandrieren oder Folienblasen zu Folien, Filmen, Strängen, Fasern, Geweben, Profilen, Platten, Rohren, körnigen Massen, Granulaten oder anderen Formteilen. Diese können wiederum als Unterlage im Sinne der vorliegenden Erfindung verwendet werden.

Diese Variante des erfindungsgemäßen Verfahrens wird insbesondere dann angewandt, wenn als erfindungsgemäße Teile Formteile hergestellt werden sollen, welche im wesentlichen aus dem Bestandteil (IA) bestehen, d.h., bei denen der Bestandteil (IA) die Form vorgibt.

In erfindungsgemäßer Verfahrensweise läßt man die flüssige Phase (IG) sich verfestigen. Im Falle der Schmelze (IG) geschieht dies durch Abkühlen und Erstarren. Im Falle lösemittelhaltiger flüssiger Phasen (IG) läßt man die Lösemittel bei Raumtemperatur oder höheren Temperaturen, gegebenenfalls unter Zuhilfenahme von Vakuum, verdampfen.

Für die vorliegende Erfindung ist es wesentlich, daß man den hierbei resultierenden Festkörper (IH) tempert. Die Zeit, welche für das Tempern aufgebracht werden muß, richtet sich nach dem Eigenschaftsprofil des jeweils vorliegenden Festkörpers (IH) und kann von Fall zu Fall sehr unterschiedlich sein. Erfindungsgemäß ist es indes von Vorteil, eine Temperzeit von einer Minute nicht zu unterschreiten und eine solche von zehn Stunden nicht zu überschreiten.

Die Temperaturen, welche beim Tempern angewandt werden, richten sich gleichfalls nach dem Eigenschaftsprofil des jeweils vorliegenden Festkörpers (IH) und können daher ebenfalls von Fall zu Fall sehr unterschiedlich sein. Erfindungsgemäß ist es von Vorteil, beim Tempern 80 °C nicht zu unterschreiten und 300 °C nicht zu überschreiten. Je nach vorliegendem Festkörper (IH) werden kurze Temperzeiten mit hohen Tempertemperaturen oder lange Temperzeiten mit vergleichsweise niedrigen Tempertemperaturen kombiniert. Indes kann es durchaus auch notwendig sein, den Festkörper (IH) während einer langen Zeit bei hohen Temperaturen oder während einer kurzen Zeit bei niedrigen Temperaturen zur tempern. Während des Temperns kann die Temperatur konstant gehalten oder nach einem vorgegebenen Programm variiert werden. Welche Temperbedingungen in jedem Einzelfall vorteilhaft sind, kann der Fachmann anhand einfacher Vorversuche ermitteln.

Der hierbei resultierende Bestandteil (IA) kann Zusatzstoffe (J) enthalten. Im allgemeinen sind diese Zusatzstoffe in dem Bestandteil (IA) in einer Menge enthalten, welche seine mesomorphen Eigenschaften nicht oder nur in vernachlässigbarem Ausmaß beeinträchtigt. Im allgemeinen empfiehlt es sich, die Menge der Zusatzstoffe (J) auf 60, vorzugsweise 50 und insbesondere 40 Gew.-%, bezogen auf die Gesamtmenge des Bestandteils (IA), inklusive Zusatzstoffe (J), zu begrenzen. In speziellen Fällen können diese Mengen indes überschritten werden.

Beispiele geeigneter Zusatzstoffe (J) sind Polymere, Vemetzer, Katalysatoren für die Vernetzung, Initiatoren, insbesondere Photoinitiatoren, Pigmente, Farbstoffe, Füllstoffe, Verstärkerfüllstoffe, Rheologiehilfsmittel, Netz- und Dispergiermittel, Entschäumer, Haftvermittler, Additive zur Verbesserung der Untergrundbenetzung, Additive zur Verbesserung der Oberflächenglätte, Mattierungsmittel, Verlaufmittel, Filmbildehilfsmittel, Trockenstoffe, Hautverhinderungsmittel, Lichtschutzmittel, Korrosionsinhibitoren, Biozide, Flammschutzmittel, Polymerisationsinhibitoren, insbesondere Photoinhibitoren, oder Weichmacher, wie sie beispielsweise auf dem Kunststoff- oder Lacksektor üblich und bekannt sind. Die Auswahl der Zusatzstoffe (J) richtet sich nach dem gewünschten Eigenschaftsprofil des Bestandteil (IA) und dessen Verwendungszweck und kann daher vom Fachmann in einfacher Weise, gegebenenfalls unter Zuhilfenahme einfacher Vorversuche, getroffen werden.

Die Zusatzstoffe (J) können zur flüssigen Phase (IB), zur flüssigen Phase (IG) und/oder zum Bestandteil (IA) hinzugegeben werden. Erfindungsgemäß ist es von Vorteil, sie zu den genannten flüssigen Phasen (IB) und/oder (IG) hinzuzugeben, weil hierdurch eine bessere Verteilung der Zusatzstoffe (J) erreicht wird.

Die zweite erfindungswesentliche Komponente (II) des erfindungsgemäßen Mehrschichtsystems ist mindestens eine Schicht (IIA), welche dreidimensional vernetzt ist und welche erfindungsgemäß hergestellt wird, indem man mindestens einen wäßrigen, thermisch härtbaren Beschichtungsstoff (IIB), enthaltend mindestens ein Bindemittel (IIC) und mindestens ein Vernetzungsmittel (IID), auf die Oberfläche des Bestandteils (IA) appliziert und die resultierende Naßschicht (IIE) thermisch härtet.

Für die Herstellung des erfindungsgemäß Mehrschichtsystems sind grundsätzlich alle üblichen und bekannten, am Markt erhältlichen, wäßrigen, thermisch härtbaren Beschichtungsstoffe (IIB) geeignet. Beispiele geeigneter Beschichtungsstoffe (IIB) sind Elektrotauchlacke, Wasserfüller, Wasserbasislacke oder wäßrige Klarlacke, inklusive Pulverslurry-Klarlacke, wie sie beispielsweise in den Patentschriften EP-A-0 643 734, US-A4,791,168, US-A- 4,423,179, EP-A-0 424 705, EP-A-0 522 420, EP-A-0 089 492, EP-A-0 521 928, EP-A-0 436 941, JP-A-1-280757, EP-A-0 619 329, DE-A-43 22 242, DE-A-41 32 430, EP-A-0 358 979, DE-A-195 42 626, DE-A-44 21 823, EP-A-0 652 264, DE-A-196 17 086, EP-A-0 654 052 oder DE-A-196 23 371 beschrieben werden.

Der erste wesentliche Bestandteil der wäßrigen, thermisch härtbaren Beschichtungsstoffe (IIB) ist mindestens ein Bindemittel (IIC), das ein in Wasser lösliches oder gegebenenfalls auch in Form einer Pulver-Slurry dispergierbares, oligomeres oder polymeres Harz mit funktionellen Gruppen, die mit den entsprechenden komplementären reaktiven funktionellen Gruppen in den Vernetzungsmitteln (IID) reagieren können, darstellt.

Beispiele geeigneter erfindungsgemäß bevorzugter Bindemittel (IIC) sind lineare und/oder verzweigte und/oder blockartig, kammartig und/oder statistisch aufgebaute Poly(meth)acrylate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, von denen die Poly(meth)acrylate, die Polyester, die Polyurethane, die Polyether und die Epoxidharz-Amin-Addukte besonders vorteilhaft sind und deshalb besonders bevorzugt verwendet werden.

Hinsichtlich der Herstellbarkeit, der Handhabung und der besonders vorteilhaften Eigenschaften der hiermit hergestellten erfindungsgemäßen Beschichtungsmittel bieten die Poly(meth)acrylate, die Polyester und/oder die Polyurethane ganz besondere Vorteile, weswegen sie bevorzugt verwendet werden.

Beispiele geeigneter wasserlöslicher oder -dispergierbarer Bindemittel (IIC) enthalten entweder
(i) funktionelle Gruppen, die durch Neutralisationsmittel und/oder Quaternisierungsmittel in Kationen überführt werden können, und/oder kationische Gruppen
   oder
(ii) funktionelle Gruppen, die durch Neutralisationsmittel in Anionen überführt werden können, und/oder anionische Gruppen
   und/oder
(iii) nichtionische hydrophile Gruppen.

Beispiele geeigneter funktioneller Gruppen, die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter kationischer Gruppen sind primäre, sekundäre, tertiäre oder quaternäre Ammoniumgruppen, tertiäre Sulfoniumgruppen oder quaternäre Phosphoniumgruppen, insbesondere quaternäre Ammoniumgruppen.

Beispiele geeigneter funktioneller Gruppen, die durch Neutralisationsmittel in Anionen überführt werden können, sind Carbonsäure-, Sulfonsäure- oder Phosphonsäuregruppen, insbesondere Carbonsäuregruppen.

Beispiele geeigneter anionischer Gruppen sind Carboxylat-, Sulfonat- oder Phosphonatgruppen, insbesondere Carboxylatgruppen.

Beispiele geeigneter erfindungsgemäß zu verwendender nichtionischer hydrophiler Gruppen sind Polyethergrupppen, insbesondere Poly(alkylenether)gruppen.

Hinsichtlich der Herstellbarkeit, der Handhabung und der vorteilhaften Eigenschaften der hiermit hergestellten Beschichtungsstoffe (IIB) bieten die Bindemittel (IIC), welche die anionenbildenden Gruppen und/oder Anionen (ii), insbesondere die Carbonsäure- und/oder die Carboxylatgruppen enthalten, ganz besondere Vorteile, weswegen sie bevorzugt verwendet werden.

Der weitere wesentliche Bestandteil der wäßrigen, thermisch härtbaren Beschichtungsstoffe (IIB) sind Vernetzungsmittel (IID), welche mit den reaktiven funktionellen Gruppen der Bindemittel (IIC) unter Bildung eines dreidimensionalen duroplastischen Netzwerks reagieren können.

Beispiele geeigneter komplementärer reaktiver funktioneller Gruppen, welche solche Vernetzungsreaktionen eingehen, sind in der folgenden Übersicht zusammengestellt.

### Übersicht:

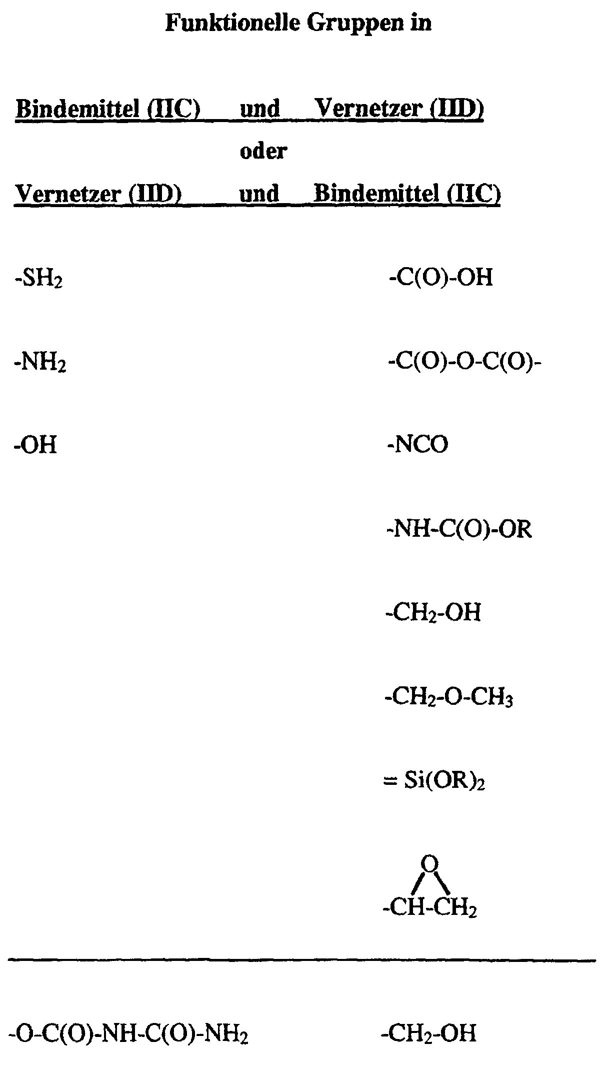

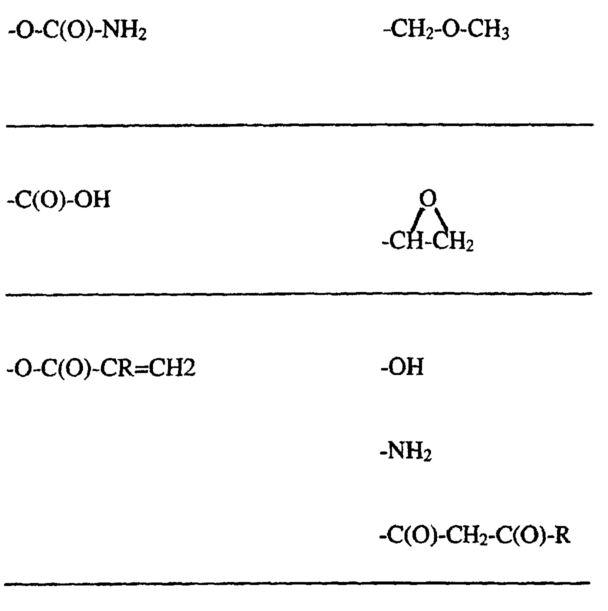

In der Übersicht steht die Variable R für einen organischen Rest, insbesondere einen Alkyl- oder Arylrest.

Die Kombination von Bindemitteln (IIC), welche als reaktive funktionelle Gruppe Hydroxylgruppen enthalten, und von Vernetzungsmitteln (IID), welche die entsprechenden komplementären funktionellen Gruppen aufweisen, sind von Vorteil. Entsprechende Beschichtungsstoffe (IIB) werden deshalb bevorzugt verwendet.

Beispiele für Vernetzungsmittel (IID), welche für die bevorzugten Beschichtungsstoffe (IIB) geeignet sind, sind die üblichen und bekannten Aminoplastharze, deren Methylol- und/oder Methoximethylgruppen z. T. mittels Carbamat- oder Allophanatgruppen defunktionalisiert sein können. Vernetzungsmitteln (IID) dieser Art werden in den Patentschriften US-A-4,710, 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele für Vernetzungsmitteln (IID), welche für die bevorzugten Beschichtungsstoffe (IIB) geeignet sind, sind Siloxangruppen enthaltende Verbindungen oder Harze, Anhydridgruppen enthaltende Verbindungen oder Harze, Epoxidgruppen enthaltende Verbindungen oder Harze, blockierte und/oder unblockierte, monomere und/oder oligomere Polyisocyanate, wie sie beispielsweise in "Methoden der organischen Chemie", Houben-Weyl, Band 14/2, 4. Auflage, Georg Thieme Verlag, Stuttgart 1963, Seiten 61 bis 70, und von W. Siefken in Liebigs Annalen der Chemie, Band 562, Seiten 75 bis 136, beschrieben werden, Tris(alkoxycarbonylamino)triazine, wie sie in den Patentschriften US-A-4,939,213, US-A-5,084,541, US-A-5,288,865 oder EP-A-0 604 922 beschrieben werden und/oder beta-Hydroxyalkylamide wie N,N,N',N'-Tetrakis(2-hydroxyethyl)adipamid oder N,N,N',N'-Tetrakis(2-hydroxypropyl)-adipamid.

Neben diesen wesentlichen Bestandteilen können die wäßrigen, thermisch härtbaren Beschichtungsstoffe (IIB) die vorstehend beschriebenen Zusatzstoffe (J) in üblichen und bekannten Mengen enthalten. Außerdem können sie Bestandteile enthalten, welche mit aktinischem Licht, insbesondere UV-Strahlung, und/oder Elektronenstrahlung härtbar sind.

In erfindungsgemäßer Verfahrensweise werden die vorstehend beschriebenen wäßrigen, thermisch härtbaren Beschichtungsstoffe (IIB) auf die Oberfläche der vorstehend im Detail beschriebenen Bestandteile (IA) appliziert. Methodisch gesehen weist die Applikation keine Besonderheiten auf, sondern richtet sich insbesondere danach, ob die Bestandteile (IA) als dreidimensionale Formteile oder zweidimensionale Gegenstände bzw. auf dreidimensionalen Formteilen oder zweidimensionalen Gegenständen vorliegen und/oder nach dem Verwendungszweck der resultierenden erfindungsgemäßen Mehrschichtsysteme. Grundsätzlich kommen daher die vorstehend aufgeführten Applikationsmethoden in Betracht, wobei der Fachmann die Methode, welche für den jeweiligenen Einzelfall vorteilhaft ist, anhand seiner Erfahrung gegebenenfalls unter Zuhilfenahme orientierender Versuche vornehmen kann.

Erfindungsgemäß werden die applizierten Naßschichten (IIE) thermisch gehärtet. Hierbei werden vorteilhafterweise Temperaturen zwischen 100 und 200 °C angewandt. In speziellen Anwendungsformen der erfindungsgemäßen Beschichtungsmittel können auch tiefere Härtungstemperaturen von 100 bis 160 °C angewendet werden.

Sofern die wäßrigen, thermisch härtbaren Beschichtungsstoffe (IIB) Bestandteile enthalten, welche mit aktinischem Licht, insbesondere UV-Strahlung, und/oder Elektronenstrahlung härtbar sind, geht der thermischen Härtung die Härtung durch Strahlung voraus oder nach. Die Härtung durch Strahlung, insbesondere UV-Strahlung, weist keine methodischen Besonderheiten auf, sondern wird in üblichen und bekannten Anlagen unter den Bedingungen durchgeführt, wie sie beispielsweise von R. Holmes in U.V. and E.B. Curing Formulations for Printing Inks, Coatings and Paints, SITA Technology, Academic Press, London, United Kindom 1984, oder von D. Stoye und W. Freitag (Editoren) in Paints , Coatings and Solvents, Second Completely Revised Edition, Wiley-VCH, Weinheim, New York, 1998, beschrieben werden.

Außer den beiden erfindungswesentlichen Komponenten (I) und (II) können die erfindungsgemäßen Mehrschichtsysteme noch weitere Komponenten enthalten. Beispiele geeigneter weiterer Komponenten sind die vorstehend genannten Unterlagen, insbesondere die Filme, Folien, Fasern, Gewebe oder Formteile, insbesondere Automobilkarosseriebauteile, aus Metall, Glas, Holz, Papier, Kunststoff, Leder oder Verbundmaterialien hieraus. Weitere Beispiele geeigneter weiterer Komponenten sind zusätzliche Schichten, welche auf die Oberfläche der Schicht (IIA) und/oder die Schicht (IA) aufgetragen werden, insbesondere zusätzliche Lackschichten und/oder Klebstoffschichten.

Die resultierenden erfindungsgemäßen Mehrschichtsysteme sind vielfältig anwendbar, beispeilsweise als Formteile und Laminate, insbesondere im Automobilbau, oder als mehrschichtige Lackierung in der Automobilserien- und -reparaturlackierung, der industriellen Lackierung, inklusive Coil Coating, und der Möbellackierung. Hierbei weisen die Gegenstände insbesondere die Automobile, Coils oder Möbel, welche mindestens ein erfindungsgemäßes Mehrschichtsystem enthalten, eine gute Korrosionsbeständigkeit auf.

### Beispiel

### 1. Die Herstellung erfindungsgemäßer mehrschichtiger Lackierungen

### 1.1 Die Herstellung des Bestandteils (IA)

### 1.1.1 Die Herstellung eines anionischen Polyelektrolyten (IC)

1424,2 Teile Butylglykol wurden in einem Harzreaktor vorgelegt und auf 140 °C erhitzt. Anschließend wurde eine Mischung aus 1280 Teilen n-Butylacrylat, 144,2 Teilen Acrylsäure, 28,5 Teilen Peroxid TBPB (tert.-Butylperbenzoat) und 188 Teilen Butylglykol während zwei Stunden unter Rühren zudosiert. Die resultierende Mischung wurde danach unter Rühren während vier Stunden auf 140 °C erhitzt. Die resultierende Lösung des Polymerisats wies einen Festkörpergehalt von 50% auf. Das Kopfgruppenäquivalentgewicht des Polymerisats lag bei 712 g/mol. Bei den Kopfgruppen handelt es sich bekanntermaßen um den hydrophilen Teil eines Tensids.

### 1.1.2 Die Herstellung eines Ammoniumgruppen enthaltenden Polyelektrolyten (ID)

490 Teile Epikote^{R} 1001 (Epoxidharz der Firma Shell mit einem Epoxidäquivalentgewicht von 490 g/mol) wurden in 190,1 Teilen Butylglykol aufgelöst und auf 100 °C erhitzt. Hiernach wurden 373,8 Teile DETA Ketimin (Diketimin hergestellt aus Diethylentriamin und Methylisobutylketon, 75%-ig in Methylisobutylketon) hinzugegeben, und die resultierende Reaktionsgemisch wurde während drei Stunden unter Rühren auf 100 bis 115 °C erhitzt. Anschließend wurden 36 Teile Wasser zur Hydrolyse der Ketimingruppen zugesetzt. Es resultierte eine Lösung mit einem Festkörpergehalt von 54%. Das Kopfgruppenäquivalentgewicht des kationischen Polyelektrolyten (ID) lag bei 712 g/mol.

### 1.13 Die Beschichtung von Blechen mit dem Bestandteil (IA)

Eine Lösung des Polyelektrolyten (IC), entsprechend 1424 Teilen Polyelektrolyt (C), und eine Lösung des Polyelektrolyten (ID), entsprechend 1099 Teilen Polyelektrolyt (ID) (vgl. die Beispiele 1.1.1 und 1.1.2), wurden miteinander vermischt, so daß das molare Verhältnis der Kopfgruppen bei 1: 1 lag. Die so erhaltene flüssige Phase (IG) wurde auf blanke Bleche von 0,13 mm Dicke aufgerakelt, so daß eine Trockenfilmdicke von 60 µm resultierte. Anschließend wurde der Film auf dem Blech während einer Stunde bei 130 °C eingebrannt.

Es wurden glatte, harte Filme des Bestandteils (IA) mit hoher Flexibilität erhalten. Sie waren beständig gegenüber wäßrigen Lösungen von Salzen und verdünnten Säuren. Die beschichteten Bleche konnten bis zu einem T-Bend von 0 ohne Filmabplatzungen umgeformt werden.

Kleinwinkel-röntgendiffraktometrische Messungen an den Filmen ergaben Streupeaks, welche auf das Vorliegen mesomorpher Strukturen hinwiesen.

### 1.2 Die Herstellung der erfindungsgemäßen mehrschichtigen Lackierungen

### 1.2.1 bis 1.2.4

Die gemäß dem Beispiel 1.1.3 hergestellten beschichteten Bleche wurden bei den Beispielen 1.2.1 bis 1.2.3 mit wäßrigen, thermisch härtbaren Beschichtungsstoffen (IIB) beschichtet, so daß jeweils eine Trockenschichtdicke von 12 bis 15 µm resultierte. Anschließend wurden die Beschichtungsstoffe während 10 min bei 80 °C belüftet und anschließend während 45 min bei 145 °C eingebrannt.

Bei dem Beispiel 1.2.4 wurde nach dem Naß-in-naß-Verfahren zunächst ein Wasserbasislack appliziert, so daß eine Trockenschichtdicke von 12 bis 15 µm resultierte. Nach dem Vortrocknen der Naßschicht während 10 min bei 80 °C wurde ein konventioneller Klarlack appliziert, so daß eine Trockenschichtdicke von 25 bis 30 µm resultierte, wonach die beiden Schichten während 30 min bei 130 °C eingebrannt wurden.

Hierbei wurden für das
- **Beispiel 1.2.1** ein handelsüblicher wäßriger Coil Coating-Decklack mit einem Polyester als Bindemittel (IIC) und Aminoplastharzen als Vernetzungsmittel (IID) (CD24-7106 der Firma BASF Coatings AG),
- **Beispiel 1.2.2** ein handelsüblicher wäßriger Packbandlack (CW24-9093 der Firma BASF Coatings AG),
- **Beispiel 1.2.3** ein handelsüblicher wäßriger Einkomponenten-Basislack (FV92-0920 der Firma BASF Coatings AG) und
- **Beispiel 1.2.4** ein handelsüblicher Wasserbasislack (FV9630UF der Firma BASF Coatings AG) und ein handelsüblicher Klarlack (FF950111 der Firma BASF Coatings AG)
verwendet.

Die mit Hilfe der wäßrigen Beschichtungsstoffe (IIB) hergestellten Schichten (IIA) hafteten auf den Schichten aus dem Bestandteil (IA). Insgesamt resultierten korossionsstabile mehrschichtige Lackierungen.

## Patentansprüche

1. Mehrschichtsystem, enthaltend
(I) mindestens einen Bestandteil (IA), welcher mesomorphe Polyelektrolytkomplexe enthält oder hieraus besteht und welcher herstellbar ist, indem man
I.1) in einer flüssigen Phase (IB)
I.1.1) mindestens einen polymeren und/oder oligomeren, organischen, anionischen Polyelektrolyten (IC) mit mindestens einem polymeren und/oder oligomeren, organischen, kationischen Polyelektrolyten (ID) und/oder mindestens einem kationischen Tensid (IE)
oder
I.1.2) mindestens einen polymeren und/oder oligomeren, organischen, kationischen Polyelektrolyten (ID) mit mindestens einem anionischen Tensid (IF)
in stöchiometrischem oder nicht stöchiometrischem Verhältnis umsetzt,
I.2) die resultierende flüssige Phase (IG) auf eine Unterlage oder in eine Form gießt und
I.3) sich verfestigen läßt und
I.4) den resultierenden Festkörper (IH) tempert;
sowie
(II) mindestens eine Schicht (IIA), welche dreidimensional vernetzt ist und herstellbar ist, indem man
II.1) mindestens einen wäßrigen, thermisch härtbaren Beschichtungsstoff (IIB), enthaltend
II.1.1) mindestens ein Bindemittel (IIC) und
II.1.2) mindestens ein Vernetzungsmittel (IID),
auf die Oberfläche des Bestandteils (IA) appliziert und
II.2) die resultierende Naßschicht (IIE) thermisch härtet.

2. Verfahren zur Herstellung von Mehrschichtsystemen, bei dem man mindestens zwei Bestandteile übereinander appliziert und nach jeder Applikation härtet, **dadurch gekennzeichnet, daß** man hierbei
(I) mindestens einen Bestandteil (IA), welcher mesomorphe Polyelektrolytkomplexe enthält oder hieraus besteht, herstellt, indem man
I.1) in einer flüssigen Phase (IB)
I.1.1) mindestens einen polymeren und/oder oligomeren, organischen, anionischen Polyelektrolyten (IC) mit mindestens einem polymeren und/oder oligomeren, organischen, kationischen Polyelektrolyten (ID) und/oder mindestens einem kationischen Tensid (IE)
oder
I.1.2) mindestens einen polymeren und/oder oligomeren, organischen, kationischen Polyelektrolyten (ID) mit mindestens einem anionischen Tensid (IF)
in stöchiometrischem oder nicht stöchiometrischem Verhältnis umsetzt,
I.2) die resultierende flüssige Phase (IG) auf eine Unterlage oder in eine Form gießt und
I.3) sich verfestigen läßt und
I.4) den resultierenden Festkörper (IH) tempert;
wonach man auf dem resultierenden Bestandteil (IA)
(II) mindestens eine Schicht (IIA), welche dreidimensional vernetzt ist, herstellt, indem man
II.1) mindestens einen wäßrigen, thermisch härtbaren Beschichtungsstoff (IIB), enthaltend
II.1.1) mindestens ein Bindemittel (IIC) und
II.1.2) mindestens ein Vernetzungsmittel (IID),
auf die Oberfläche des Bestandteils (IA) appliziert und
II.2) die resultierende Naßschicht (IIE) thermisch härtet.

3. Reaktives System, umfassend
(I) mindestens einen Bestandteil (I.A), enthaltend mindestens einen mesomorphen Polyelektrolytkomplex aus
I.1.1) mindestens einem polymeren und/oder oligomeren, organischen, anionischen Polyelektrolyten (IC) und mindestens einem polymeren und/oder oligomeren, organischen, kationischen Polyelektrolyten (ID) und/oder mindestens einem kationischen Tensid (IE)
oder
I.1.2) mindestens einem polymeren und/oder oligomeren, organischen, kationischen Polyelektrolyten (ID) und mindestens einem anionischen Tensid (IF) sowie
(II) mindestens einen wäßrigen, thermisch härtbaren Beschichtungsstoff (IIB), enthaltend
II.1.1) mindestens ein Bindemittel (IIC) und
II.1.2) mindestens ein Vernetzungsmittel (IID).

4. Das Mehrschichtsystem nach Anspruch 1, das Verfahren zu seiner Herstellung nach Anspruch 2 oder das reaktive System nach Anspruch 3, **dadurch gekennzeichnet, daß** man die in flüssiger Phase (B) erzeugten mesomorphen Polyelektrolytkomplexe und/oder ihre Vorstufen durch mehrfaches Ausfällen aus einer Lösung und Wiederauflösen reinigt.

5. Das Mehrschichtsystem nach Anspruch 1 oder 4, das Verfahren zu seiner Herstellung nach Anspruch 2 oder 4 oder das reaktive System nach Anspruch 3 oder 4, **dadurch gekennzeichnet, daß** man solche Polyelektrolyte (IC) und (ID) auswählt, deren Polymerketten (IC) und (ID) für sich selbst gesehen nicht verträglich wären, sondern sich in fester Phase wieder entmischten.

6. Das Mehrschichtsystem nach einem der Ansprüche 1, 4 oder 5 oder das Verfahren zu seiner Herstellung nach einem der Ansprüche 2, 4 oder 5, **dadurch gekennzeichnet, daß** man den Festkörper (IH) während 1 min bis 10 h tempert.

7. Das Mehrschichtsystem nach einem der Ansprüche 1 oder 4 bis 6 oder das Verfahren zu seiner Herstellung nach einem der Ansprüche 2 oder 4 bis 6, **dadurch gekennzeichnet, daß** man den Festkörper (IH) bei Temperaturen zwischen 80 bis 300 °C tempert.

8. Das Mehrschichtsystem nach einem der Ansprüche 1 oder 4 bis 7, das Verfahren zu seiner Herstellung nach einem der Ansprüche 2 oder 4 bis 7 oder das reaktive System nach einem der Ansprüche 3 bis 5 oder 7, **dadurch gekennzeichnet, daß** der Bestandteil (IA), die Schicht (IIA) und/oder der wäßrige, thermisch härtbare Beschichtungsstoff (IIB) Zusatzstoffe (J), insbesondere Polymere, Vernetzer, Katalysatoren für die Vernetzung, Initiatoren, insbesondere Photoinitiatoren, Pigmente, Farbstoffe, Füllstoffe, Verstärkerfüllstoffe, Rheologiehilfsmittel, Netz- und Dispergiermittel, Entschäumer, Haftvermittler, Additive zur Verbesserung der Untergrundbenetzung, Additive zur Verbesserung der Oberflächenglätte, Mattierungsmittel, Verlaufmittel, Filmbildehilfsmittel, Trockenstoffe, Hautverhinderungsmittel, Lichtschutzmittel, Korrosionsinhibitoren, Biozide, Flammschutzmittel, Polymerisationsinhibitoren, insbesondere Photoinhibitoren, und/oder Weichmacher, enthalten.

9. Das Mehrschichtsystem nach einem der Ansprüche 1 oder 4 bis 8, das Verfahren zu seiner Herstellung nach einem der Ansprüche 2 oder 4 bis 8 oder das reaktive System nach einem der Ansprüche 3 bis 5 oder 8, **dadurch gekennzeichnet, daß** die Schicht (IIA) und/oder der wäßrige, thermisch härtbare Beschichtungsstoff (IIB) Bestandteile enthalten, welche mit aktinischem Licht, insbesondere UV-Strahlung, und/oder Elektronenstrahlung härtbar sind.

10. Verwendung der Mehrschichtsysteme gemäß einem der Ansprüche 1 oder 4 bis 9 oder der nach dem Verfahren gemäß einem der Ansprüche 2 oder 4 bis 9 hergestellten Mehrschichtsysteme als Formteile und Laminate, insbesondere im Automobilbau.

11. Verwendung der Mehrschichtsysteme gemäß einem der Ansprüche 1 oder 4 bis 9, der nach dem Verfahren gemäß einem der Ansprüche 2 oder 4 bis 9 hergestellten Mehrschichtsysteme oder des reaktiven Systems nach einem der Ansprüche 3 bis 5, 8 oder 9, in der Automobilserien- und -reparaturlackierung, der industriellen Lackierung, inklusive Coil Coating, und der Möbellackierung.

12. Gegenstände, insbesondere Automobile, Coils oder Möbel, enthaltend mindestens ein Mehrschichtsystem gemäß einem der Ansprüche 1 oder 4 bis 9 oder mindestens ein nach dem Verfahren gemäß einem der Ansprüche 2 oder 4 bis 9 hergestelltes Mehrschichtsystem.

## Claims

1. A multicoat system comprising
(I) at least one constituent (IA) which consists of or comprises mesomorphic polyelectrolyte complexes and which can be prepared by
I.1) reacting, in a liquid phase (IB),
I.1.1) at least one polymeric and/or oligomeric, organic, anionic polyelectrolyte (IC) with at least one polymeric and/or oligomeric, organic, cationic polyelectrolyte (ID) and/or at least one cationic surfactant (IE)
or
I.1.2) at least one polymeric and/or oligomeric, organic, cationic polyelectrolyte (ID) with at least one anionic surfactant (IF)
in a stoichiometric or non-stoichiometric ratio,
I.3) allowing it to solidify, and
I.4) heat-treating the resulting solid (IH);
and
(II) at least one coat (IIA) which is three-dimensionally crosslinked and can be prepared by
II.1) applying at least one aqueous, thermally curable coating material (IIB) comprising
II.1.1) at least one binder (IIC) and
II.1.2) at least one crosslinking agent (IID),
to the surface of the constituent (IA), and
II.2) thermally curing the resulting wet film (IIE).

2. A process for producing multicoat systems, in which at least two constituents are applied one over the other and are cured after each application, which comprises
(I) preparing at least one constituent (IA) which consists of or comprises mesomorphic polyelectrolyte complexes, by
I.1) reacting, in a liquid phase (IB),
I.1.1) at least one polymeric and/or oligomeric, organic, anionic polyelectrolyte (IC) with at least one polymeric and/or oligomeric, organic, cationic polyelectrolyte (ID) and/or at least one cationic surfactant (IE)
or
I.1.2) at least one polymeric and/or oligomeric, organic, cationic polyelectrolyte (ID) with at least one anionic surfactant (IF)
in a stoichiometric or non-stoichiometric ratio,
I.2) pouring the resulting liquid phase (IG) onto a substrate or into a mold, and
I.3) allowing it to solidify, and
I.4) heat-treating the resulting solid (IH);
and then, on the resulting constituent (IA),
(II) preparing at least one coat (IIA) which is three-dimensionally crosslinked by
II.1) applying at least one aqueous, thermally curable coating material (IIB) comprising
II.1.1) at least one binder (IIC) and
II.1.2) at least one crosslinking agent (IID)
to the surface of the constituent (IA), and
II.2) thermally curing the resulting wet film (IIE).

3. A reactive system comprising
(I) at least one constituent (IA) comprising at least one mesomorphic polyelectrolyte complex comprising
I.1.1) at least one polmeric and/or oligomeric, organic, anionic polyelectrolyte (IC) and at least one polymeric and/or oligomeric, organic, cationic polyelectrolyte (ID) and/or at least one cationic surfactant (IE)
or
I.1.2) at least one polymeric and/or oligomeric, organic, cationic polyelectrolyte (ID) and at least one anionic surfactant (IF)
and also
(II) at least one aqueous, thermally curable coating material (IIB) comprising
II.1.1) at least one binder (IIC) and
II.1.2) at least one crosslinking agent (IID).

4. The multicoat system as claimed in claim 1, the process for producing it as claimed in claim 2, or the reactive system as claimed in claim 3, wherein the mesomorphic polyeletrolyte complexes produced in liquid phase (B), and/or their precursors, are purified by repeated precipitation from a solution and redissolution.

5. The multicoat system as claimed in claim 1 or 4, the process for producing it as claimed in claim 2 or 4, or the reactive system as claimed in claim 3 or 4, wherein polyelectrolytes (IC) and (ID) selected are those whose polymer chains (IC) and (ID), viewed independently, would not be compatible but would instead separate again in the solid phase.

6. The multicoat system as claimed in any of claims 1, 4 and 5 or the process for producing it as claimed in any of claims 2, 4 and 5, wherein the solid (IH) is heat-treated for from 1 minute to 10 hours.

7. The multicoat system as claimed in any of claims 1 and 4 to 6 or the process for producing it as claimed in any of claims 2 and 4 to 6, wherein the solid (IH) is heat-treated at temperatures between 80 and 300°C.

8. The multicoat system as claimed in any of claims 1 and 4 to 7, the process for producing it as claimed in any of claims 2 and 4 to 7, or the reactive system as claimed in any of claims 3 to 5 and 7, wherein the constituent (IA), the coat (IIA) and/or the aqueous, thermally curable coating materials (IIB) comprise additives (J), especially polymers crosslinkers, crosslinking catalysts, initiators, especially photoinitiators, pigments, dyes, fillers, reinforcing fillers, rheological assistants, wetting agents and dispersants, defoamers, adhesion promoters, additives for improving substrate wetting, additives for improving surface smoothness, dulling agents, leveling agents, film-forming auxiliaries, driers, antiskinning agents, light stabilizers, corrosion inhibitors, biocides, flame retardants, polymerization inhibitors, especially photoinhibitors, or plasticizers.

9. The multicoat system as claimed in any of claims 1 and 4 to 8, the process for producing it as claimed in any of claims 2 and 4 to 8, or the reactive system as claimed in any of claims 3 to 5 and 8, wherein the coat (IIA) and/or the aqueous, thermally curable coating materials (IIB) comprise constituents which are curable with actinic light, especially UV radiation, and/or electron beams.

10. The use of the multicoat system as claimed in any of claims 1 and 4 to 9 or of the multicoat system produced by the process as claimed in any of claims 2 and 4 to 9 as shaped parts and laminates, especially in automobile construction.

11. The use of the multicoat system as claimed in any of claims 1 and 4 to 9, of the multicoat system produced by the process as claimed in any of claims 2 and 4 to 9, or of the reactive system as claimed in any of claims 3 to 5, 8 and 9 in automotive OEM finishing and refinish, in industrial coating, including coil coating, and in furniture coating.

12. An article, especially an automobile, coil or furniture, comprising at least one multicoat system as claimed in any of claims 1 and 4 to 9 or at least one multicoat system produced with the process as claimed in any of claims 2 and 4 to 9.

## Revendications

1. Système multicouches, contenant
(I) au moins un constituant (IA), qui contient des complexes de polyélectrolytes mésomorphes ou en est constitué, et que l'on peut préparer en faisant réagir
I.1) dans une phase liquide (IB),
I.1.1) au moins un polyélectrolyte polymère et/ou oligomère organique, anionique (IC) avec au moins un polyélectrolyte polymère et/ou oligomère, organique, cationique (ID) et/ou au moins avec un agent tensioactif cationique (IE),
ou
I.1.2) au moins un polyélectrolyte polymère et/ou oligomère, organique, cationique (ID) avec au moins un agent tensioactif anionique (IF),
dans un rapport stoechiométrique ou non stoechiométrique,
I.2) en coulant la phase fluide résultante (IG) sur un subjectile ou dans un moule et
I.3) en laissant cette dernière se solidifier et
I.4) en procédant au revenu du corps solide résultant (IH) ;
ainsi
(II) qu'au moins une couche (IIA), qui est réticulée d'une manière tridimensionnelle et que l'on peut préparer en procédant à l'application, sur la surface du constituant (IA),
II.1) d'au moins une substance de revêtement aqueuse, thermiquement durcissable (IIB), comprenant
II.1.1) au moins un liant (IIC) et
II.1.2) au moins un agent de réticulation (IID), et
II.2) en procédant au durcissement par voie thermique de la couche humide résultante (IIE).

2. Procédé de préparation d'un système multicouches, lors duquel l'on applique l'un sur l'autre au moins deux constituants et lors duquel l'on procède à durcissement après chaque application, **caractérisé en ce que** l'on prépare, en l'occurrence,
(I) au moins un constituant (IA), qui contient des complexes de polyélectrolytes mésomorphes ou qui en est composé, en faisant réagir
I.1) dans une phase fluide (IB),
I.1.1) au moins un polyélectrolyte polymère et/ou oligomère organique, anionique (IC) avec au moins un polyélectrolyte polymère et/ou oligomère, organique, cationique (ID) et/ou au moins avec un agent tensioactif anionique (IE)
ou
I.1.2) au moins un polyélectrolyte polymère et/ou oligomère, organique, cationique (ID) avec au moins un agent tensioactif anionique (IF),
dans un rapport stoechiométrique ou non stoechiométrique,
I.2) en coulant la phase fluide résultante (IG) sur un subjectile ou dans un moule et
I.3) en laissant cette dernière se solidifier et
I.4) en procédant au revenu du corps solide résultant (IH) ;
à la suite de quoi l'on prépare, sur le constituant résultant (IA), contenant
(II) au moins une couche (IIA), qui est réticulée d'une manière tridimensionnelle, en procédant à l'application, sur la surface du constituant (IA),
II.1) d'au moins une substance de revêtement aqueuse, thermiquement durcissable (IIB), comprenant
II.1.1) au moins un liant (IIC) et
II.1.2) au moins un agent de réticulation (IID), et
II.2) en procédant au durcissement par voie thermique de la couche humide résultante (IIE).

3. Système réactif, comprenant
(I) au moins un constituant (I.A), contenant au moins un complexe de polyélectrolytes mésomorphe fait
I.1.1) d'au moins un polyélectrolyte polymère et/ou oligomère organique, anionique (IC) et au moins un polyélectrolyte polymère et/ou oligomère, organique, cationique (ID) et/ou au moins un agent tensioactif anionique (IE),
ou
I.1.2) au moins un polyélectrolyte polymère et/ou oligomère, organique, cationique (ID) et au moins un agent tensioactif anionique (IF),
ainsi
(II) qu'au moins une substance de revêtement aqueuse, thermiquement durcissable (IIB), contenant
II.1.1) au moins un liant (IIC) et
II.1.2.) au moins un agent de réticulation (IID).

4. Système multicouches selon la revendication 1, procédé en vue de sa fabrication selon la revendication 2, ou système réactif selon la revendication 3, **caractérisé en ce que** l'on purifie les complexes de polyélectrolytes mésomorphes produits en phase fluide (B) et/ou leurs précurseurs par précipitation multiple hors d'une solution et par re-dissolution.

5. Système multicouches selon la revendication 1 ou 4, procédé en vue de sa fabrication selon la revendication 2 ou la revendication 4, ou système réactif selon la revendication 3 ou la revendication 4, **caractérisé en ce que** l'on sélectionne des polyélectrolytes de ce genre (IC) et (ID), dont les chaînes polymères (IC) et (ID) ne seraient pas compatibles en elles-mêmes, mais qui subiraient, à nouveau, une démixtion en phase solide.

6. Système multicouches selon l'une quelconque des revendications 1, 4 ou 5 ou procédé en vue de sa fabrication selon l'une quelconque des revendications 2,4 ou 5, **caractérisé en ce que** l'on procède au revenu du corps solide (IH) pendant une période de 1 minute à 10 heures.

7. Système multicouches selon l'une quelconque des revendications 1 ou 4 à 6, ou procédé en vue de sa fabrication selon l'une quelconque des revendications 2 ou 4 à 6, **caractérisé en ce que** l'on procède au revenu du corps solide (IH) à des températures comprises entre 80 et 300°C.

8. Système multicouches selon l'une quelconque des revendications 1 ou 4 à 7, procédé en vue de sa fabrication selon l'une quelconque des revendications 2 ou 4 à 7, ou système réactif selon l'une quelconque des revendications 3 à 5 ou 7, **caractérisé en ce que** le constituant (IA), la couche (IIA) et/ou la substance de revêtement aqueuse, thermiquement durcissable (IIB) contiennent des additifs (J), en particulier, des polymères, des agents de réticulation, des catalyseurs en vue de la réticulation, des agents d'initiation, en particulier, des agents de photo initiation, des pigments, des colorants, des charges, des charges de renforcement, des adjuvants de rhéologie, des agents mouillants et dispersants, des agents anti mousse, des agents promoteurs de l'adhésion, des additifs d'amélioration du mouillage du subjectile, des agents d'amélioration du lissé superficiel, des produits de matage, des produits nivelants, des adjuvants filmogènes, des agents dessicatifs, des agents anti formation de peau, des agents de protection contre la lumière, des agents inhibiteurs de la corrosion, des agents biocides, des agents ignifuges, des agents inhibiteurs de la polymérisation, en particulier, des agents photo inhibiteurs et/ou des agents plastifiants.

9. Système multicouches selon l'une quelconque des revendications 1 ou 4 à 8, procédé en vue de sa fabrication selon l'une quelconque des revendications 2 ou 4 à 8, ou système réactif selon l'une quelconque des revendications 3 à 5 ou 8, **caractérisé en ce que** le couche (IIA) et/ou la substance de revêtement aqueuse, thermiquement durcissable (IIB) contient ou contiennent des constituants qui sont durcissables par l'intermédiaire de lumière actinique, en particulier, par l'intermédiaire d'un rayonnement UV et/ou d'un rayonnement électronique.

10. Utilisation d'un système multicouches selon l'une quelconque des revendications 1 ou 4 à 9 du système multicouches fabriqué selon l'une quelconque des revendications 2 ou 4 à 9, en tant que pièces moulées et stratifiés, en particulier, dans l'industrie automobile.

11. Utilisation du système multicouches selon l'une quelconque des revendications 1 ou 4 à 9, du système multicouches fabriqué selon l'une quelconque des revendications 2 ou 4 à 9 ou du système réactif selon l'une quelconque des revendications 3 à 5, 8 ou 9, dans le vernissage en série d'automobiles et le vernissage de réparation, dans le vernissage industriel, y compris dans la méthode d'enduction en continu de bandes, et dans le vernissage de meubles.

12. Objets, en particulier, automobiles, enductions ou meubles, contenant au moins un système multicouches selon l'une quelconque des revendications 1 ou 4 à 9 ou au moins un système multicouches fabriqué conformément au procédé selon l'une quelconque des revendications 3 ou 4 à 9.
